# EUROPÄISCHE PATENTSCHRIFT

(11) **EP 1 611 361 B1**
(45) Veröffentlichungstag und Bekanntmachung des Hinweises auf die Patenterteilung: **29.04.2009**
(21) Anmeldenummer: 04704553.9
(22) Anmeldetag: 23.01.2004
(51) Int. Cl.: F16B 13/04

(54) **Spreizanker aus Metall**
Metal expansion anchor
Élément d'anchrage à expansion en métal

(30) Priorität: 11.03.2003 DE 20303806 U
(43) Veröffentlichungstag der Anmeldung: 04.01.2006
(73) Patentinhaber: fischerwerke GmbH & Co. KG, 72178 Waldachtal (DE)
(72) Erfinder: FRISCHMANN, Albert, 79341 Kenzingen (DE)
(86) Internationale Anmeldenummer: PCT/EP2004/000544
(87) Internationale Veröffentlichungsnummer: WO 2004/081393

(56) Entgegenhaltungen:
- EP-A- 0 995 914
- DD-A- 39 474
- DE-A- 2 536 137
- DE-A- 2 637 043

## Beschreibung

Die Erfindung betrifft einen Spreizanker aus Metall mit den Merkmalen des Oberbegriffs des Anspruchs 1.

Zur Befestigung von Gegenständen an einem Untergrund ist häufig gefordert, dass der verwendete Spreizanker sowohl eine hohe Auszugsfestigkeit aufweist als auch die Verwendung von Schrauben oder Gewindestangen erlaubt. Hierzu sind Spreizanker aus Metall mit einem Innengewinde erforderlich. Weiterhin verlangt die Verankerung in der Zugzone, in der üblicherweise Risse auftreten, dass der Spreizanker ein Nachspreizverhalten aufweist. Da die allgemein als Schlaganker bekannten Spreizanker nicht nachspreizen können, schlägt die Druckschrift EP 0 995 914 A2 einen Spreizanker vor, dessen Ankergrundteil ein Innengewinde und einen Spreizabschnitt aufweist, auf den eine Spreizhülse axial verschiebbar aufgesetzt ist. Der Spreizanker wird durch Einziehen des Ankergrundteils in die Spreizhülse verankert, wobei die Spreizhülse radial im Bohrloch verspannt wird, ohne axial verschoben zu werden. Weiterhin schlägt die Druckschrift vor, dass der Spreizanker vormontiert eine Schraube mit einem aufgesetzten hülsenartigen Stauchelement aufweist. Die Schraube ist soweit in das Innengewinde des Ankergrundteils eingeschraubt, dass das Stauchelement auf der einen Seite am Schraubenkopf und auf der anderen Seite an der der Schraube zugewandten Stirnseite des Ankergrundteils anliegt. Das Stauchelement gewährleistet beim Einbringen des Spreizankers in das Bohrloch, dass zwischen dem Ankergrundteil und dem Schraubenkopf eine hinreichend große Distanz gegeben ist, so dass das Ankergrundteil ausreichend in die Spreizhülse eingezogen werden kann, ohne vorher am Schraubenkopf aufzusitzen. Bei diesem Vorgang wird das Stauchelement axial gestaucht.

Der Nachteil einer solchen Anordnung ist, dass das Stauchelement nur in Verbindung mit einer vormontierten Schraube zur Verwendung kommen kann. Wird dagegen eine besonders lange Schraube oder eine Gewindestange zur Befestigung benötigt, da beispielsweise ein besonders großes Bauteil befestigt werden soll oder der Anker zum Abhängen von Rohren an einer Decke benutzt werden soll, ist die vormontierte Schraube mit Stauchelement ungeeignet.

Der Erfindung liegt daher die Aufgabe zu Grunde, einen nachspreizenden Spreizanker aus Metall mit Innengewinde zu schaffen, der für unterschiedlich lange Schrauben, Gewindestangen oder dgl. geeignet ist.

Die Aufgabe wird erfindungsgemäß durch den Spreizanker mit den Merkmalen des Anspruchs 1 gelöst. Der erfindungsgemäße Spreizanker weist ein Stauchelement auf, das im Ankergrundteil angeordnet ist. Hierdurch kann der Spreizanker mit unterschiedlich langen Schrauben gesetzt werden, beispielsweise um unterschiedlich große Gegenstände zu befestigen. Die Schraube wird soweit in das Innengewinde des Spreizankers eingeschraubt, bis es mit seinem Einführende auf dem Stauchelement aufsitzt. Dieses sitzt wiederum mit seinem anderen Ende auf dem Grund der Bohrung für das Innengewinde, einem entsprechenden Absatz oder dgl. auf. Hierdurch verspürt der Bediener einen deutlichen Anstieg des Eindrehmoments, der signalisiert, dass der Spreizanker in diesem Zustand in das Bohrloch im Untergrund eingebracht werden kann. Der Spreizanker wird soweit eingeschoben, bis die Schraube mit ihrem Kopf auf dem Untergrund bzw. einer dazwischen liegenden Unterlegscheibe und/oder dem zu befestigenden Bauteil aufsitzt. Zum Verspreizen des Spreizankers wird die Schraube weiter in das Innengewinde geschraubt. Da der Schraubenkopf als Widerlager wirkt, wird das Ankergrundteil entgegen der Einbringrichtung gezogen und hierdurch die feststehende Spreizhülse gespreizt. Gleichzeitig wird das Stauchelement gestaucht. Gegenüber dem ersten Eindrehen der Schraube verläuft dieser Vorgang auf einem höheren Drehmomentniveau und daher unter Zuhilfenahme von Werkzeug. Dabei muss die Stauchfähigkeit des Stauchelements derart bestimmt sein, dass sich durch die Stauchung während des Spreizvorgangs kein erneuter, signifikanter Drehmomentanstieg ergibt, solange eine hinreichenden Verspreizung der Spreizhülse noch nicht erreicht ist. Der erneute Drehmomentanstieg soll also durch die Verspreizung der Spreizhülse und nicht etwa durch die Stauchung des Stauchelements erfolgen. Nach erfolgter Verspreizung kann die Schraube entweder im Spreizanker verbleiben, wenn sie die Befestigungsaufgabe bereits erfüllt, oder sie wird wieder herausgeschraubt und statt dessen beispielsweise eine Gewindestange eingeschraubt. In diesem Fall ist die Schraube lediglich als Setzwerkzeug zu verstehen.

Vorzugsweise ist das Stauchelement eine Kunststoffbuchse. Dies ermöglicht eine einfache Herstellung durch Ablängung von einem Rohr. Daneben sind aber auch andere Materialien und Formen denkbar, wie beispielsweise eine Druckfeder aus Stahl. Das Stauchelement ist außerdem vorzugsweise verliersicher im Ankerteil angeordnet, beispielsweise dadurch, dass es mit Presssitz gefügt oder in das Innengewinde des Ankerteils eingeschraubt ist. Hierdurch kann das Stauchelement nicht bei der Lagerung, dem Transport oder bei der Über-Kopf-Montage verloren gehen.

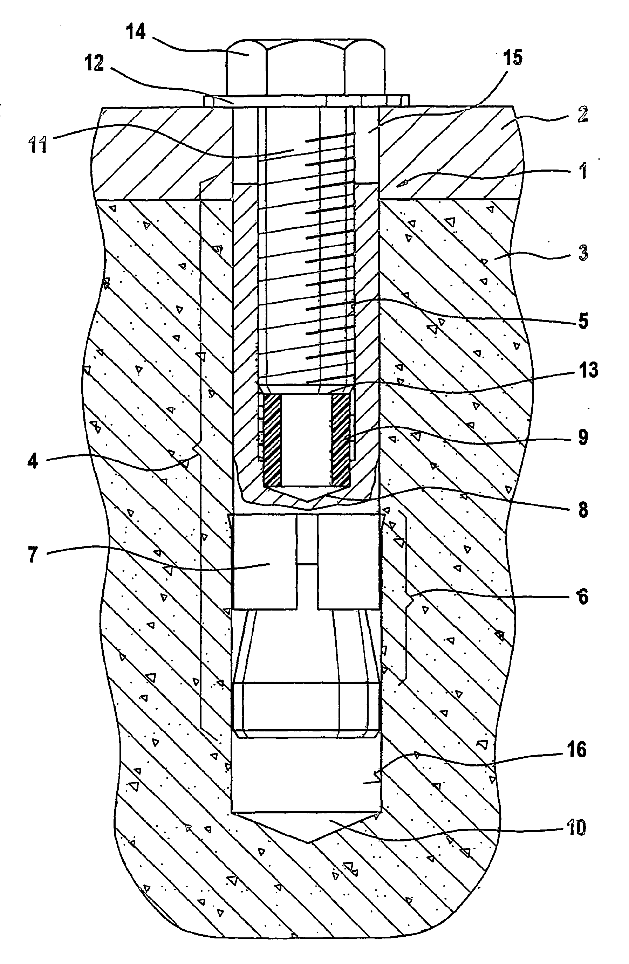

Die Erfindung wird nachfolgend anhand eines in der Zeichnung dargestellten Ausführungsbeispiels näher erläutert. Figur 1 zeigt den erfindungsgemäßen Spreizanker 1 zur Befestigung des Bauteils 2 an dem Untergrund 3 im Zustand vor der Verspreizung. Der Spreizanker 1 ist aus Stahl und weist ein Ankergrundteil 4 mit einem Innengewinde 5 auf. Das Ankergrundteil 4 weist einen im Durchmesser reduzierten, sich entgegen der Einbringrichtung des Spreizankers 1 verjüngenden Spreizabschnitt 6 auf, auf den eine Spreizhülse 7 axial verschiebbar aufgesetzt ist. Auf dem Grund 8 der Bohrung für das Innengewinde 5 des Ankergrundteils 4 sitzt ein hülsenartiges Stauchelement 9 aus Kunststoff auf. Sein Außendurchmesser ist so gewählt, das es mit leichtem Presssitz gefügt und hierdurch verliersicher im Ankergrundteil 4 angeordnet ist.

Vor dem Einbringen des Spreizankers 1 in das Bohrloch 10 des Untergrunds 3 wird die Schraube 11 mit der Unterlegscheibe 12 soweit in das Innengewinde 5 des Ankergrundteils 4 eingeschraubt, bis das einführseitige Ende 13 auf dem Stauchelement 9 aufsitzt. In diesem Zustand wird der Spreizanker 1 soweit in das Bohrloch 10 eingeschoben, bis die Unterlegscheibe 12 und der Schraubenkopf 14 auf dem zu befestigenden Bauteil 2 aufsitzen. Im vorliegenden Fall ragt ein Teil des Ankergrundteils 4 in die Durchgangsbohrung 15 des zu befestigenden Bauteils 2. Hierdurch wirkt das Ankergrundteil 4 gleichzeitig zentrierend auf das Bauteil 2 und nimmt ggf. Querkräfte auf. Sollte dies nicht gewünscht sein, muss einfach nur eine entsprechend längere Schraube gewählt werden.

Zum Verspreizen des Spreizankers 1 wird die Schraube 11 angezogen. Durch den Kontakt der Spreizhülse 7 mit der Bohrlochinnenwand 16 und dem Spreizabschnitts des Ankergrundteils 4 ist dieses drehgesichert. Damit wird das Ankergrundteil 4 entgegen der Einbringrichtung des Spreizankers 1 gezogen, während die Spreizhülse 7 axial auf dem Spreizabschnitt gleitet und hierdurch spreizend den Spreizanker 1 verankert. Gleichzeitig wird das Stauchelement 9 axial gestaucht und radial nach innen verdrängt. Dabei sind Material und Geometrie des Stauchelements 9 so aufeinander abgestimmt, dass es zu einem sehr leichtem Stauchen kommt, zumindest entlang des für das Spreizen der Spreizhülse 7 notwendigen Einschraubweges der Schraube 11.

## Patentansprüche

1. Spreizanker (1) aus Metall zur Befestigung eines Bauteils (2) an einem Untergrund (3), wobei der Spreizanker (1) ein Ankergrundteil (4) mit einem Innengewinde (5) aufweist, das in ein Bohrloch (10) im Untergrund (3) einbringbar ist und einen Spreizabschnitt (6) aufweist, auf den eine Spreizhülse (7) axial verschiebbar aufgesetzt ist, und wobei der Spreizanker (1) ein Stauchelement (9) aufweist, **dadurch gekennzeichnet, dass** das Stauchelement (9) im Ankergrundteil (4) angeordnet ist.

2. Spreizanker nach Anspruch 1, **dadurch gekennzeichnet, dass** das Stauchelement (9) eine Kunststoffbuchse ist.

3. Spreizanker nach Anspruch 1, **dadurch gekennzeichnet, dass** das Stauchelement (9) verliersicher angeordnet ist.

## Claims

1. Expansible anchor (1) made of metal, for fastening a component (2) to a substrate (3), wherein the expansible anchor (1) has a basic anchor part (4) having an internal thread (5), which is arranged to be introduced into a hole (10) drilled in the substrate (3) and which has an expansion portion (6), on which an expansion sleeve (7) is mounted so as to be axially displaceable, and wherein the expansible anchor (1) has a longitudinal compression element (9), **characterised in that** the longitudinal compression element (9) is arranged in the basic anchor part (4).

2. Expansible anchor according to claim 1, **characterised in that** the longitudinal compression element (9) is a plastics bush.

3. Expansible anchor according to claim 1, **characterised in that** the longitudinal compression element (9) is arranged in a loss-proof manner.

## Revendications

1. Élément d'ancrage à expansion (1) en métal servant à fixer une pièce (2) sur un support (3), sachant que l'élément d'ancrage à expansion (1) comprend une partie d'ancrage de base (4) dotée d'un filetage intérieur (5), partie qui peut être insérée dans un trou percé (10) dans le support (3) et qui présente un tronçon d'expansion (6) sur lequel une coquille d'expansion (7) est montée en étant mobile axialement, et sachant que l'élément d'ancrage à expansion (1) comprend un élément de compression (9), **caractérisé en ce que** l'élément de compression (9) est disposé dans la partie d'ancrage de base (4).

2. Élément d'ancrage à expansion selon la revendication 1, **caractérisé en ce que** l'élément de compression (9) est une douille en matière plastique.

3. Élément d'ancrage à expansion selon la revendication 1, **caractérisé en ce que** l'élément de compression (9) est disposé de manière imperdable.
